# EUROPÄISCHE PATENTSCHRIFT

(11) **EP 2 888 553 B1**
(45) Veröffentlichungstag und Bekanntmachung des Hinweises auf die Patenterteilung: **13.11.2019**
(21) Anmeldenummer: 13748065.3
(22) Anmeldetag: 13.08.2013
(51) Int. Cl.: G01B 11/14

(54) **KONTROLLVORRICHTUNG FÜR EINE FÖRDERVORRICHTUNG UND VERFAHREN ZUM KONTROLLIEREN EINER FÖRDERVORRICHTUNG**
CONTROLLER FOR A CONVEYOR, AND METHOD FOR CONTROLLING A CONVEYOR
DISPOSITIF DE CONTRÔLE D'UN DISPOSITIF DE CONVOYAGE ET PROCÉDÉ DE CONTRÔLE D'UN DISPOSITIF DE CONVOYAGE

(30) Priorität: 27.08.2012 DE 102012215183
(43) Veröffentlichungstag der Anmeldung: 01.07.2015
(73) Patentinhaber: Dürr Systems AG, 74321 Bietigheim-Bissingen (DE)
(72) Erfinder: KÜSTER, Harald, 71696 Möglingen (DE); KINCSES, Michael, 70327 Stuttgart (DE); FEDERMANN, Andreas, 70563 Stuttgart (DE); HENNE, Jens, 75417 Mühlacker (DE); BOY, Felix, 34131 Kassel (DE)
(74) Vertreter: Hoeger, Stellrecht & Partner Patentanwälte mbB
(86) Internationale Anmeldenummer: PCT/EP2013/066918
(87) Internationale Veröffentlichungsnummer: WO 2014/032964

(56) Entgegenhaltungen:
- US-A1- 2005 139 451
- US-A1- 2005 231 734
- US-B1- 6 167 607

## Beschreibung

Die vorliegende Erfindung betrifft eine Kontrollvorrichtung für eine Fördervorrichtung, mittels welcher insbesondere die Passgenauigkeit von Bestandteilen der Fördervorrichtung kontrolliert werden kann.

Bei der Förderung von Werkstücken, insbesondere von Karosserien oder Karosseriemodulen, durch eine Fertigungsanlage, insbesondere durch eine Fertigungsanlage einer Automobilfabrik, muss in besonderem Maße den Anforderungen an die Oberflächenbehandlung und die Beschichtung, insbesondere an eine Lackierung, Rechnung getragen werden.

Die zu fördernden Werkstücke sind direkt an einer Werkstückaufnahme der Fördervorrichtung, beispielsweise an einem Aufnahmeelement einer Förderkette, angeordnet oder indirekt über einen zwischengeschalteten Werkstückträger mit der Fördervorrichtung verbunden. Solche Werkstückträger können beispielsweise Skids oder Skidrahmen, Skillets, Traversen oder Ähnliches sein.

Die Berührungs- und Aufnahmestellen zwischen der Fördervorrichtung und dem Werkstück, zwischen dem Fördervorrichtung und dem Werkstückträger oder zwischen dem Werkstückträger und dem Werkstück müssen hinsichtlich ihrer Toleranzen so bemessen sein, dass stets ein ordnungsgemäßes Zueinanderfinden und eine sichere Verbindung und gegebenenfalls Zentrierung dieser Stellen gewährleistet werden kann.

Als Berührungs- und Aufnahmestellen sind an der Fördervorrichtung, an dem Werkstück und/oder an dem Werkstückträger Kopplungselemente, beispielsweise in Form von Zapfen, Bolzen oder Pins, vorgesehen, die beispielsweise in Öffnungen an einem anderen Element der Fördertechnik hineinragen und/oder mit anderen Elementen der Fördertechnik zusammenwirken, um das Werkstück formschlüssig an dem Werkstückträger oder an einer Werkstückaufnahme der Fördervorrichtung oder um den Werkstückträger an einer Werkstückträgeraufnahme der Fördervorrichtung zu fixieren.

So weist insbesondere ein Skidrahmen Aufnahmepins, sogenannte "Skidpins", auf, mittels welcher ein zu förderndes Werkstück, insbesondere eine Fahrzeugkarosserie oder ein Karosseriemodul, lösbar an dem Skidrahmen arretierbar ist.

Die Skidpins eines Skidrahmens müssen vorgegebene Abstände voneinander innerhalb eines Toleranzbereichs einhalten, um passgenau mit den jeweils zugeordneten Aufnahmestellen des Werkstücks zusammenwirken zu können.

Es ist bekannt, eine Kontrolle dieser Skidpins mittels einer mechanischen Prüflehre durchzuführen. Eine solche Prüflehre wird von einer prüfenden Person manuell auf den Skidrahmen aufgelegt, und anschließend wird von der prüfenden Person, teilweise über mechanische Schieber, kontrolliert, ob die Positionen der Skidpins innerhalb des Toleranzbereichs liegen oder nicht.

Ferner ist es bekannt, eine Prüflehre fest in einer Prüfstation zu installieren und den zu prüfenden Skidrahmen in die Prüfstation hinein zu bewegen. Wenn der Skidrahmen sich in der Prüfstation befindet, werden mechanische Schieber manuell betätigt, um die Prüfung der Skidpins durchzuführen.

Bei diesen bekannten Prüfverfahren ist von Nachteil, dass eine Prüflehre von einer prüfenden Person manuell aufgelegt werden muss und/oder mechanische Schieber von einer prüfenden Person manuell betätigt werden müssen, um eine Prüfung der Skidpins durchzuführen.

Die US 2005/0231734 A1 offenbart eine Kontrollvorrichtung gemäß dem Oberbegriff von Anspruch 1.

Die US 6 167 607 B1 offenbart eine Kontrollvorrichtung für eine Fördervorrichtung, umfassend mehrere Bilderzeugungsvorrichtungen zur Erzeugung eines Bildes, das zumindest einen Abschnitt der Fördervorrichtung, eines zu fördernden Werkstücks und/oder eines Werkstückträgers darstellt, und eine Auswertungsvorrichtung, mittels welcher aus dem mindestens einen Bild eine Information über eine Relativposition zwischen mindestens einem ersten Element der Fördervorrichtung, des Werkstücks oder des Werkstückträgers und mindestens einem zweiten Element der Fördervorrichtung, des Werkstücks oder des Werkstückträgers ermittelbar ist.

Die US 2005/139451 A1 offenbart eine Fördervorrichtung für Werkstücke, die weder eine Bilderzeugungsvorrichtung noch eine Bildauswertungsvorrichtung aufweist.

Der vorliegenden Erfindung liegt die Aufgabe zugrunde, eine Kontrollvorrichtung für eine Fördervorrichtung zu schaffen, welche eine schnelle und zuverlässige Überprüfung von Elementen einer Fördervorrichtung, eines zu fördernden Werkstücks und/oder eines Werkstückträgers ermöglicht, um eine gute Passgenauigkeit beim Zusammenwirken des geprüften Elements mit anderen Elementen der Fördervorrichtung, des zu fördernden Werkstücks oder des Werkstückträgers zu erreichen.

Diese Aufgabe wird durch eine Kontrollvorrichtung für eine Fördervorrichtung nach Anspruch 1 gelöst.

Der vorliegenden Erfindung liegt das Konzept zugrunde, die auf Einhaltung ihrer Relativpositionen zu prüfenden Elemente mit einer Bilderzeugungsvorrichtung, insbesondere einer Kamera, aufzunehmen und durch Auswertung des aufgenommenen Bildes oder einer Mehrzahl von aufgenommenen Bildern die relative Lage der zu überprüfenden Elemente zu ermitteln.

Dabei erfolgen die Erzeugung des Bildes und dessen Auswertung vorzugsweise automatisch, was eine besonders schnelle Messung ermöglicht.

Vorzugsweise wird mit der erfindungsgemäßen Kontrollvorrichtung eine Online-Messung im normalen Förderbetrieb der Fördervorrichtung in einer Fertigungsanlage, insbesondere einer Lackieranlage, durchgeführt.

Insbesondere kann vorgesehen sein, dass eine Prüfung von zu überprüfenden Elementen der Fördervorrichtung, des Werkstücks und/oder des Werkstückträgers bei jedem Durchlauf der betreffenden Elemente durch die Fördervorrichtung erfolgt.

Durch die ständige Überprüfung der Elemente der Fördertechnik während des laufenden Betriebes werden Probleme in der Passgenauigkeit zwischen der Fördervorrichtung, dem Werkstück und gegebenenfalls dem Werkstückträger sicher vermieden.

Insbesondere treten keine Probleme beim Aufsetzen eines zu fördernden Werkstücks auf Kopplungselemente eines Werkstückträgers auf, weil gewährleistet ist, dass diese Kopplungselemente sich stets innerhalb des Toleranzbereichs befinden.

Hierdurch wird die Prozesssicherheit bei der Förderung der Werkstücke durch die Fertigungsanlage erhöht, und Störungen beim Aufsetzen des Werkstücks auf die Fördervorrichtung oder auf den Werkstückträger sowie Störungen beim Verriegeln des Werkstückträgers an einer Werkstückträgeraufnahme der Fördervorrichtung werden vermieden.

Hierdurch werden deutliche Effizienz- und Kostenvorteile erzielt.

Die erfindungsgemäße Kontrollvorrichtung ermöglicht eine regelmäßige und umfassende Kontrolle der Passgenauigkeit der Elemente der Fördertechnik zur Sicherstellung der Produktionssicherheit und zur Vermeidung von Unfällen.

Durch diese regelmäßige Kontrolle kann insbesondere vermieden werden, dass die Berührungs- und Aufnahmestellen zwischen der Fördervorrichtung und dem Werkstück oder zwischen dem Werkstückträger und dem Werkstück zu irgendwelchen Beschädigungen, insbesondere zu einer schadhaften Lackierung, führen.

Insbesondere dann, wenn die zu fördernden Werkstücke mit einer Beschichtung versehen werden, ist es von Vorteil, wenn die Berührungs- und Aufnahmestellen zwischen der Fördervorrichtung und dem Werkstück oder zwischen dem Werkstückträger und dem Werkstück möglichst kleinflächig sind, damit die aufgrund der Berührung zwischen der Fördervorrichtung und dem Werkstück bzw. zwischen dem Werkstückträger und dem Werkstück nicht beschichteten Flächen möglichst klein ausfallen.

Vorzugsweise sind die Berührungs- und Aufnahmestellen zwischen der Fördervorrichtung und dem Werkstück oder zwischen dem Werkstückträger und dem Werkstück so ausgebildet und angeordnet, dass sie nach einer Entmontage durch andere Elemente, insbesondere Verbindungselemente, vorzugsweise korrosionsverhindernd, abgedeckt und somit von außen nicht mehr sichtbar sind.

Bei der Erfindung ist vorgesehen, dass mittels der Auswertungsvorrichtung eine erste Differenz zwischen einer Ist-Position eines ersten Elements der Fördervorrichtung, des Werkstücks oder des Werkstückträgers und einer Soll-Position des ersten Elements ermittelbar ist.

Ferner ist vorgesehen, dass mittels der Auswertungsvorrichtung eine zweite Differenz zwischen einer Ist-Position eines zweiten Elements der Fördervorrichtung, des Werkstücks oder des Werkstückträgers und einer Soll-Position des zweiten Elements ermittelbar ist.

Mittels der Auswertungsvorrichtung ist aus der ersten Differenz und der zweiten Differenz ein Ist-Abstand zwischen dem ersten Element und dem zweiten Element ermittelbar.

Auf diese Weise wird erreicht, dass eine gemeinsame Abweichung beider geprüften Elemente von der jeweiligen Soll-Position sich nicht auf den ermittelten Ist-Abstand zwischen diesen beiden Elementen auswirkt.

Es ist daher nicht erforderlich, bei der Überprüfung der Fördervorrichtung, eines zu fördernden Werkstücks oder eines Werkstückträgers mittels der Kontrollvorrichtung das zu prüfende Teil exakt in eine vorgegebene Messposition relativ zu der Bilderzeugungsvorrichtung zu bringen und/oder das zu prüfende Teil relativ zu der Kontrollvorrichtung zu zentrieren.

Vielmehr genügt es, wenn das zu prüfende Teil so relativ zu der Kontrollvorrichtung positioniert wird, dass die Bilderzeugungsvorrichtung den für die Auswertung mittels der Auswertungsvorrichtung benötigten Abschnitt der Fördervorrichtung, des zu fördernden Werkstücks oder des Werkstückträgers erfassen kann.

Ferner ist vorgesehen, dass mittels der Auswertungsvorrichtung der Ist-Abstand zwischen dem ersten Element und dem zweiten Element mit einem Soll-Abstand vergleichbar ist.

Liegt dieser Ist-Abstand innerhalb eines vorgegebenen Toleranzbereichs, kann das geprüfte Teil für den weiteren Fördervorgang verwendet werden.

Wenn der Ist-Abstand außerhalb des vorgegebenen Toleranzbereichs liegt, wird das geprüfte Teil von der weiteren Verwendung in der Fördervorrichtung ausgeschlossen und ausgesondert.

Diese Bewertung des zu prüfenden Teils wird vorzugsweise automatisch von der Auswertungsvorrichtung vorgenommen. Besonders günstig ist es, wenn auch die Aussonderung eines ausgeschlossenen Teils von der Auswertungsvorrichtung automatisch veranlasst wird.

Bei der Kontrollvorrichtung ist vorgesehen, dass mindestens eines der Elemente, deren Relativposition ermittelbar ist, ein Kopplungselement zum Herstellen einer mechanischen Kopplung zwischen der Fördervorrichtung und dem Werkstück, zwischen der Fördervorrichtung und dem Werkstückträger oder zwischen dem Werkstückträger und dem Werkstück ist.

Ein solches Kopplungselement kann insbesondere ein Skidpin eines Förderskids, insbesondere eines Tauch- oder Lackierskids, oder eine Aufnahme eines hängenden Warenträgers (Gehänges), beispielsweise eines Unterbodenschutz-Gehänges (UBS-Gehänges) sein.

Wenn die zu fördernden Werkstücke nur rein translatorisch bewegt werden oder leichten Kippbewegungen unterworfen werden, genügt ein Aufsetzen des zu fördernden Werkstücks auf ein solches Kopplungselement. Dabei wird das Werkstück vorzugsweise durch die Gravitation sicher an dem Kopplungselement gehalten.

Wenn während des Fördervorgangs der zu fördernden Werkstücke größere Kipp-, Schwenk- und/oder Drehbewegungen der Werkstücke durchgeführt werden, ist ein solches Kopplungselement vorzugsweise so ausgebildet, dass es das zu fördernde Werkstück gegen ein Loslösen von dem Werkstückträger oder von der Fördervorrichtung sichert.

Ferner kann vorgesehen sein, dass mindestens eines der Elemente, deren Relativposition mittels der Auswertungsvorrichtung ermittelbar ist, ein Referenzelement ist, das an der Fördervorrichtung, an dem Werkstück oder an dem Werkstückträger angeordnet ist.

Ein solches Referenzelement muss im Unterschied zu einem Kopplungselement keine mechanische Kopplungsfunktion aufweisen, sondern lediglich eine Markierungsfunktion. Ein solches Referenzelement kann insbesondere als eine Form- oder Farbmarkierung ausgebildet sein.

Ein solches Referenzelement kann beispielsweise die Form eines Ringes, eines Kreuzes oder eine andere geometrische Form aufweisen, die vorzugsweise einfach von der Auswertungsvorrichtung detektierbar ist.

Bei einer bevorzugten Ausgestaltung der Erfindung ist vorgesehen, dass die Kontrollvorrichtung mehrere Bilderzeugungsvorrichtungen zur Erzeugung von Bildern verschiedener Abschnitte der Fördervorrichtung, des Werkstücks oder des Werkstückträgers umfasst. Auf diese Weise ist es möglich, auch Relativpositionen zwischen weit voneinander entfernten Elementen der Fördervorrichtung, des Werkstücks oder des Werkstückträgers zu ermitteln. Ferner können durch die Verwendung mehrerer Bilderzeugungsvorrichtungen auch solche Bilderzeugungsvorrichtungen zum Einsatz kommen, welche nur eine vergleichsweise geringe Auflösung aufweisen.

Grundsätzlich kann vorgesehen sein, dass die zu erfassenden Elemente der Fördervorrichtung, des Werkstücks oder des Werkstückträgers bei der Erzeugung des Bildes nur mit dem ohnehin vorhandenen Umgebungslicht beleuchtet werden.

Alternativ oder ergänzend hierzu kann aber auch vorgesehen sein, dass die Kontrollvorrichtung eine oder mehrere Beleuchtungseinrichtungen zur Beleuchtung eines von einer Bilderzeugungsvorrichtung zu erfassenden Elements der Fördervorrichtung, des Werkstücks oder des Werkstückträgers umfasst. Auf diese Weise kann insbesondere der Kontrast der von der Auswertungsvorrichtung zu detektierenden Kontur oder Teilkontur des zu erfassenden Elements erhöht werden.

Als Beleuchtungseinrichtung kann beispielsweise eine Lichtquelle für ultraviolettes Licht (UV-Licht) und/oder eine Lichtquelle für infrarotes Licht (IR-Licht) verwendet werden, jeweils in Kombination mit einer auf das jeweilige Licht abgestimmten Bilderzeugungsvorrichtung.

Die von den mehreren Bilderzeugungsvorrichtungen bei einem Überprüfungsvorgang erzeugten Bilder werden vorzugsweise im Wesentlichen gleichzeitig oder in einem Messzeitraum von höchstens ungefähr 10 Sekunden, insbesondere von höchstens ungefähr 2 Sekunden, erzeugt.

Alternativ oder ergänzend zu einer Beleuchtungseinrichtung kann die Kontrollvorrichtung einen oder mehrere Reflektoren umfassen, mittels welchen ein von einer Bilderzeugungsvorrichtung zu erfassendes Element der Fördervorrichtung, des Werkstücks oder des Werkstückträgers mit reflektiertem Licht beleuchtbar ist.

Das von einem solchen Reflektor reflektierte Licht kann das ohnehin vorhandene Umgebungslicht und/oder das von einer Beleuchtungseinrichtung der Kontrollvorrichtung emittierte Licht sein.

Vorzugsweise ist die Beleuchtungseinrichtung und/oder der Reflektor der Kontrollvorrichtung so ausgebildet und angeordnet, dass die Beleuchtung des zu beleuchtenden Elements im Gegenlichtverfahren erfolgt. Hierbei liegen die Bilderzeugungsvorrichtung, insbesondere eine Kamera, das zu beleuchtende und von der Bilderzeugungsvorrichtung zu erfassende Element und die Beleuchtungseinrichtung bzw. der Reflektor auf einer gemeinsamen geradlinigen Achse, wobei die Beleuchtungseinrichtung bzw. der Reflektor so ausgerichtet ist, dass das von der Beleuchtungseinrichtung emittierte Licht bzw. das von dem Reflektor reflektierte Licht zu dem zu beleuchtenden Element und zu der Bilderzeugungsvorrichtung hin gerichtet sind.

Um auch unter widrigen Licht- und/oder Verschmutzungsverhältnissen eine sichere Detektierung des jeweils zu erfassenden Elements zu ermöglichen, ist es günstig, wenn ein von einer Bilderzeugungsvorrichtung zu erfassendes Element der Fördervorrichtung, des Werkstücks oder des Werkstückträgers, beispielsweise ein Kopplungselement, mit einer Positionsmarkierung versehen ist.

Eine solche Positionsmarkierung kann insbesondere eine Form- und/oder Farbmarkierung sein.

Beispiele für geeignete Positionsmarkierungen sind eine Bohrung, ein zentrierter Ring, ein zentriertes Kreuz oder andere, vorzugsweise rotationssymmetrische Markierungen.

Die vorliegende Erfindung betrifft ferner ein Verfahren zum Kontrollieren einer Fördervorrichtung, mittels welchem insbesondere die Passgenauigkeit von Bestandteilen der Fördervorrichtung kontrolliert werden kann.

Der vorliegenden Erfindung liegt die weitere Aufgabe zugrunde, ein solches Verfahren zum Kontrollieren einer Fördervorrichtung zu schaffen, welches eine schnelle und zuverlässige Überprüfung von Elementen der Fördervorrichtung, eines zu fördernden Werkstücks und/oder eines Werkstückträgers ermöglicht, um eine gute Passgenauigkeit beim Zusammenwirken des geprüften Elements mit anderen Elementen der Fördervorrichtung, des zu fördernden Werkstücks oder des Werkstückträgers zu erreichen.

Diese Aufgabe wird durch ein Verfahren zum Kontrollieren einer Fördervorrichtung nach Anspruch 8 gelöst.

Dabei ist es für eine umfassende Kontrolle der Passgenauigkeit der Bestandteile der Fördervorrichtung und ein rechtzeitiges Ausscheiden von nicht mehr geeigneten Bestandteilen der Fördervorrichtung, eines nicht mehr geeigneten Werkstückträgers oder eines ungeeigneten Werkstücks von Vorteil, wenn das mindestens eine Bild während des normalen Förderbetriebs der Fördervorrichtung erzeugt wird.

Während der Erzeugung des mindestens einen Bildes kann der zu überprüfende Bestandteil der Fördervorrichtung, der Werkstückträger oder das Werkstück mit einer normalen Fördergeschwindigkeit oder mit einer hiervon verschiedenen, vorzugsweise niedrigeren, Mess-Fördergeschwindigkeit gefördert werden.

Alternativ hierzu kann der zu überprüfende Bestandteil der Fördervorrichtung, der Werkstückträger oder das Werkstück für die Erzeugung des mindestens einen Bildes angehalten werden.

Ferner ist bei einer bevorzugten Ausgestaltung des erfindungsgemäßen Verfahrens vorgesehen, dass aufgrund der ermittelten Information eine Zuordnung zwischen einem zu fördernden Werkstück und einem Werkstückträger, zwischen einem zu fördernden Werkstück und einer Werkstückaufnahme der Fördervorrichtung und/oder zwischen einem Werkstückträger und einer Werkstückträgeraufnahme der Fördervorrichtung vorgenommen wird.

Insbesondere kann beispielsweise vorgesehen sein, dass durch eine automatische Bilderkennung mittels des Bilderzeugungssystems der erfindungsgemäßen Kontrollvorrichtung eine automatische Kontrolle eines Kopplungselements, insbesondere eines Skidpins, an einem Werkstückträger, insbesondere an einem Skidrahmen, und eine automatische Kontrolle einer dem Kopplungselement des Werkstückträgers zugeordneten Kopplungselementaufnahme an dem zu fördernden Werkstück erfolgt. Nach der Ermittlung der Relativpositionen von Kopplungselement und Kopplungselementaufnahme an verschiedenen Werkstückträgern und Werkstücken können dann diejenigen Werkstück/Werkstückträger-Paare ermittelt werden, bei denen das Kopplungselement und die Kopplungselementaufnahme maßlich besonders gut zueinander passen.

Mit dem erfindungsgemäßen Kontrollverfahren ist es ferner möglich, bei einem auf eine Werkstückaufnahme der Fördervorrichtung oder auf einen Werkstückträger aufgesetzten Werkstück zu kontrollieren, ob das Werkstück an der Werkstückaufnahme oder an dem Werkstückträger richtig verriegelt wurde, indem die Lage des Werkstücks relativ zu der Werkstückaufnahme bzw. relativ zu dem Werkstückträger kontrolliert wird. Dies kann beispielsweise über die Kontrolle einer Spaltweite oder über eine Kontrolle der Relativposition eines Elements des Werkstücks in Bezug auf ein Element der Werkstückaufnahme bzw. in Bezug auf ein Element des Werkstückträgers kontrolliert werden.

Eine weitere Anwendung des erfindungsgemäßen Kontrollverfahrens besteht darin, durch eine automatische Kontrolle eines Kopplungselements an einem Werkstückträger und eine automatische Kontrolle einer Kopplungselementaufnahme an einem zu fördernden Werkstück Information darüber zu erlangen, ob der Typ des Werkstücks und der Typ des Werkstückträgers miteinander kompatibel sind. Aufgrund der so erhaltenen Information kann dann dem überprüften Werkstück der richtige Werkstückträger zugeordnet werden, oder eine bereits vorgenommene Zuordnung zwischen einem Werkstück und einem Werkstückträger kann auf deren Zulässigkeit überprüft werden.

Ferner ist es mit dem erfindungsgemäßen Kontrollverfahren möglich, an dem Werkstück, an dem Werkstückträger oder an der Fördervorrichtung angeordnete Betriebsmittel (wie beispielsweise Türaufsteller, Motorhaubenaufsteller oder Heckklappenaufsteller für eine Fahrzeugkarosserie oder für ein Karosseriemodul) auf ihr Vorhandensein und auf eine korrekte Positionierung, Ausrichtung und/oder Einstellung zu überprüfen.

Hierbei werden vorzugsweise geometrische Elemente dieser Betriebsmittel daraufhin überprüft, ob dieselben relativ zu einem Referenzelement innerhalb eines Toleranzfeldes liegen oder nicht.

Ferner ist es möglich, mit dem erfindungsgemäßen Kontrollverfahren eine Werkstücktyperkennung durchzuführen. Hierbei wird ein signifikantes Detail des Werkstücks, beispielsweise eine Ecke eines Kotflügels einer Fahrzeugkarosserie, mit einer Bilderzeugungsvorrichtung aufgenommen und mittels der Auswertungsvorrichtung der Kontrollvorrichtung detektiert, und je nach detektierter Geometrie des Werkstückdetails wird dem Werkstück ein Werkstücktyp zugewiesen.

Ferner ist eine Kontrolle der Aufnahmen für Werkstückträger, insbesondere Skidrahmen, Traversen oder sogenannte "Crossbars", an einer Fördervorrichtung mittels des erfindungsgemäßen Kontrollverfahrens oder der erfindungsgemäßen Kontrollvorrichtung möglich.

Insbesondere kann bei der Übergabe eines Werkstücks, insbesondere einer Fahrzeugkarosserie, von einer Fördervorrichtung auf eine andere Fördervorrichtung oder auf einen Werkstückträger vor der Übergabe die Lage des Werkstücks, der Werkstückaufnahme der Fördervorrichtung oder des Werkstückträgers kontrolliert werden, damit ein fehlerhaftes Aufsetzen des Werkstücks auf die andere Fördervorrichtung oder auf den Werkstückträger vermieden werden kann.

Hierbei ist es günstig, wenn ein Kopplungselement der Fördervorrichtung und eine Kopplungselementaufnahme des Werkstücks von einer Bilderzeugungsvorrichtung erfasst und mittels der Auswertungsvorrichtung detektiert werden, um deren relative Lage zueinander zu ermitteln.

Ferner ist es in Abhängigkeit von dem Ergebnis dieser Kontrolle möglich, die Lage des Kopplungselements und/oder die Lage der Kopplungselementaufnahme durch einen Nachjustierungsvorgang zu verändern, um die erforderliche Passgenauigkeit zu gewährleisten.

Ferner besteht die Möglichkeit, Kopplungselementaufnahmen, insbesondere Aufnahmeöffnungen, an einem zu fördernden Werkstück, insbesondere an einer Fahrzeugkarosserie oder an einem Karosseriemodul, daraufhin zu kontrollieren, ob dieselben innerhalb eines Toleranzbereiches liegen.

Insbesondere kann hierbei der Durchmesser einer Aufnahmeöffnung oder die relative Lage von Aufnahmeöffnungen zueinander kontrolliert werden.

Wird eine Öffnung mit einer Bilderzeugungsvorrichtung erfasst und mittels der Auswertungsvorrichtung detektiert, so kann die Auswertungsvorrichtung der Öffnung eine Fläche zuweisen, die dann berechnet und mit einer vorgegebenen Soll-Kreisfläche verglichen wird.

Alternativ oder ergänzend hierzu können die Mittelpunkte verschiedener, vorzugsweise im Wesentlichen kreisförmiger, Öffnungen ermittelt und deren Abstand berechnet werden. Der errechnete Abstand kann dann daraufhin überprüft werden, ob er innerhalb eines vorgegebenen Toleranzbereiches liegt.

Wenn Traversen oder sogenannte "Crossbars" an einem zu fördernden Werkstück angebracht werden sollen, so können die Relativpositionen von Aufnahmebohrungen für diese Traversen oder "Crossbars" an dem Werkstück ermittelt werden, um zu überprüfen, ob diese Relativpositionen innerhalb eines Toleranzbereichs mit den Relativpositionen von Befestigungsmitteln, insbesondere Schrauben, an den Traversen oder "Crossbars" übereinstimmen. Weitere besondere Ausgestaltungen des erfindungsgemäßen Kontrollverfahrens wurden bereits vorstehend im Zusammenhang mit den besonderen Ausgestaltungen der erfindungsgemäßen Kontrollvorrichtung erläutert.

Die erfindungsgemäße Kontrollvorrichtung eignet sich insbesondere zur Durchführung des erfindungsgemäßen Kontrollverfahrens.

Weitere Merkmale und Vorteile der Erfindung sind Gegenstand der nachfolgenden Beschreibung und der zeichnerischen Darstellung von Ausführungsbeispielen.

In den Zeichnungen zeigen:

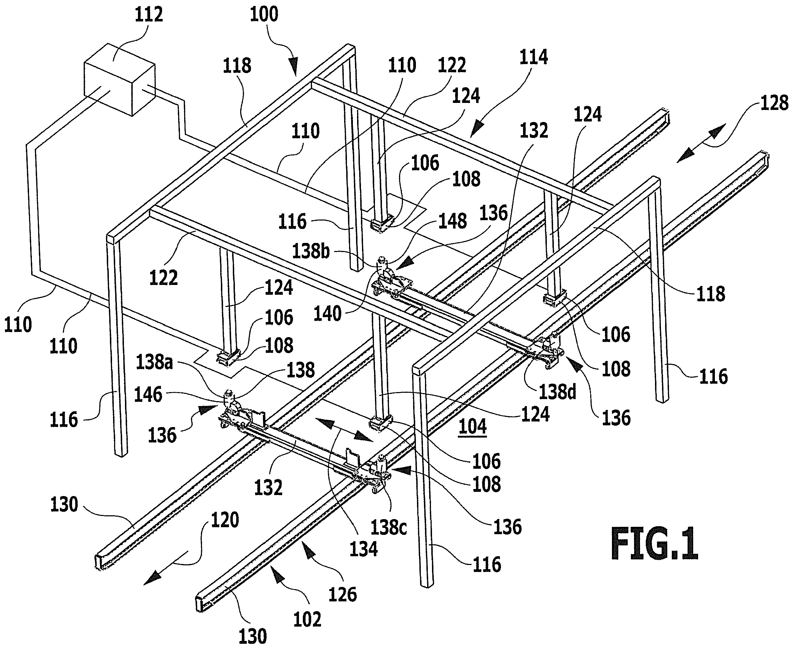

- Fig. 1: eine schematische perspektivische Darstellung einer Kontrollvorrichtung für eine Fördervorrichtung, bei welcher zu fördernde Werkstücke, insbesondere Fahrzeugkarosserien, an jeweils einem Werkstückträger, insbesondere an einem Skidrahmen, arretiert werden, wobei die Kontrollvorrichtung mehrere Bilderzeugungsvorrichtungen umfasst, welche jeweils ein Bild erzeugen, das einen Abschnitt des Werkstückträgers mit jeweils einer Arretiervorrichtung zum Arretieren des Werkstücks an dem Werkstückträger darstellt, wobei die Bilderzeugung mittels des Umgebungslichtes erfolgt;

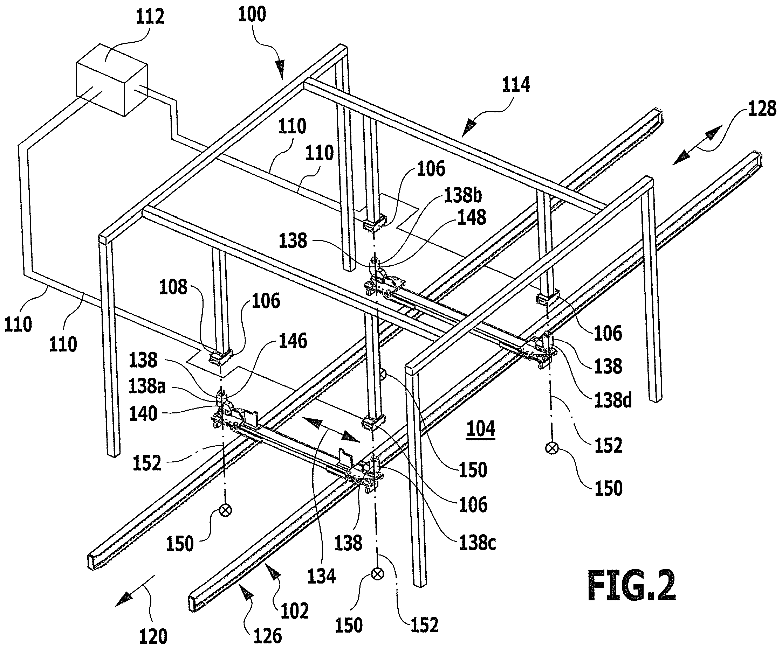

- Fig. 2: eine schematische perspektivische Darstellung einer zweiten Ausführungsform einer Kontrollvorrichtung für eine Fördervorrichtung, bei welcher jeder Bilderzeugungsvorrichtung jeweils eine Beleuchtungseinrichtung zur Beleuchtung eines von der betreffenden Bilderzeugungsvorrichtung zu erfassenden Elements des Werkstückträgers zugeordnet ist;

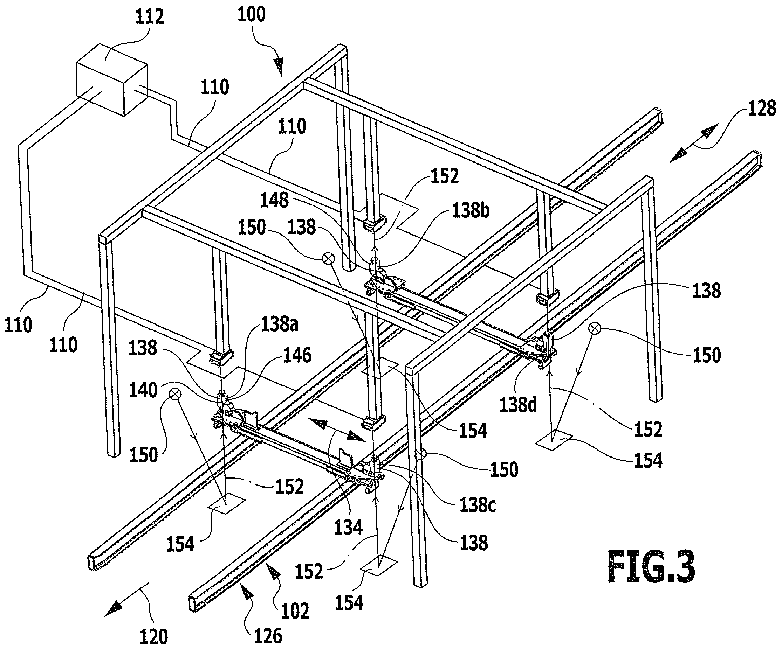

- Fig. 3: eine schematische perspektivische Darstellung einer dritten Ausführungsform einer Kontrollvorrichtung für eine Fördervorrichtung, bei welcher jeder Bilderzeugungsvorrichtung jeweils ein Reflektor zur Beleuchtung eines von der jeweiligen Bilderzeugungsvorrichtung zu erfassenden Elements des Werkstückträgers mit reflektiertem Licht zugeordnet ist;

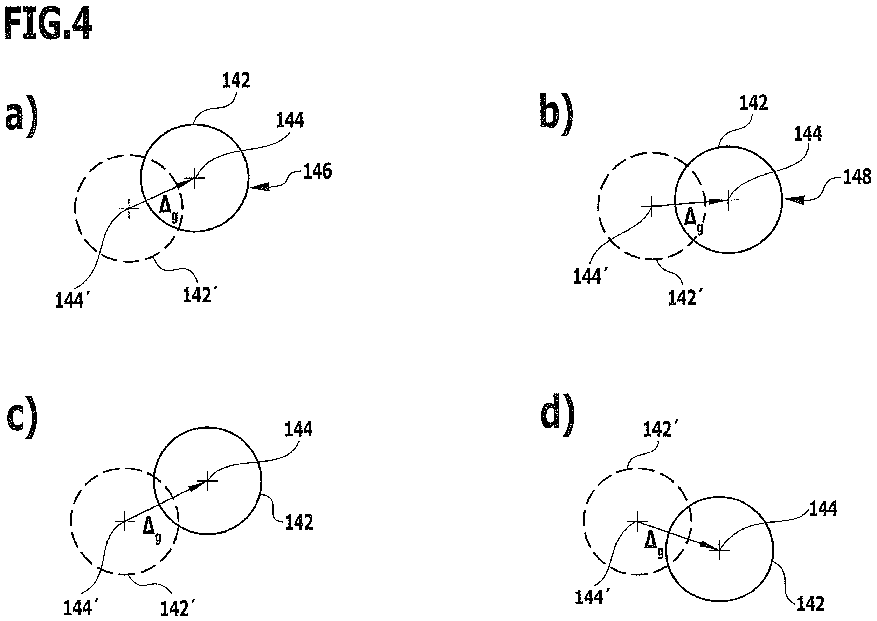

- Fig. 4: eine schematische Darstellung von Konturen verschiedener Elemente des Werkstückträgers an der von der jeweils zugeordneten Bilderzeugungsvorrichtung erfassten Ist-Position (durchgezogene Linien) und an der dem jeweiligen Element zugeordneten Soll-Position (gebrochene Linien);

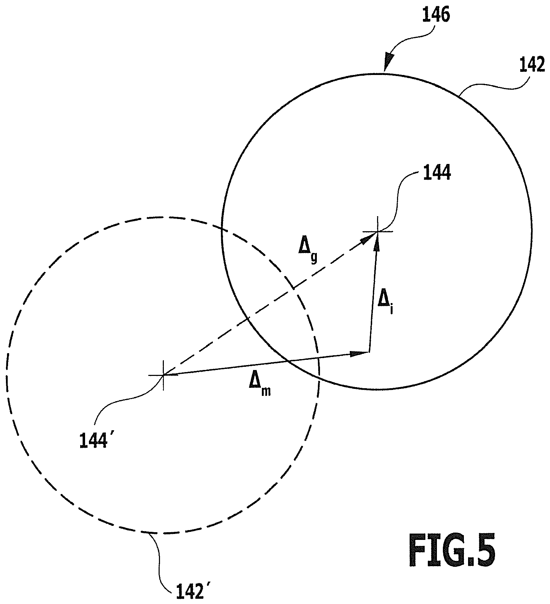

- Fig. 5: eine schematische Darstellung der Zusammensetzung einer Gesamtabweichung zwischen einer Ist-Position eines mittels einer Bilderzeugungsvorrichtung erfassten Elements des Werkstückträgers von einer diesem Element zugeordneten Soll-Position aus einer Durchschnittsabweichung mehrerer Elemente des Werkstückträgers und einer Einzelabweichung des betreffenden Elements des Werkstückträgers;

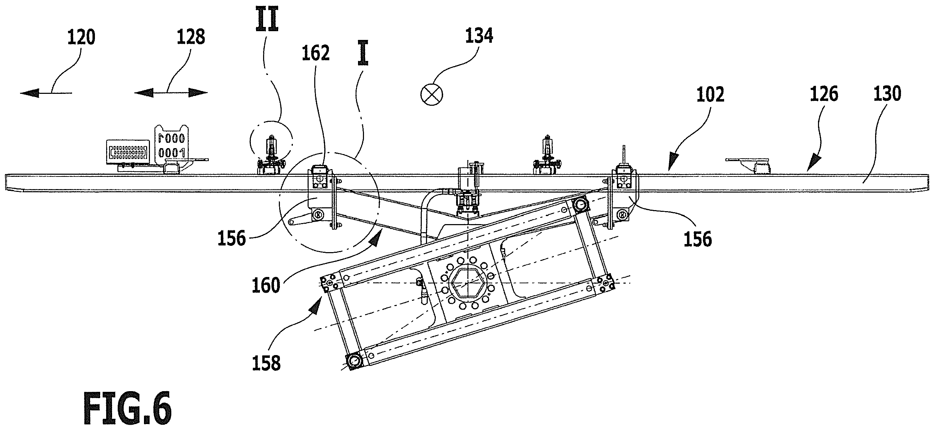

- Fig. 6: eine schematische Seitenansicht eines an einer Werkstückträgeraufnahme einer Fördervorrichtung gehaltenen Werkstückträgers;

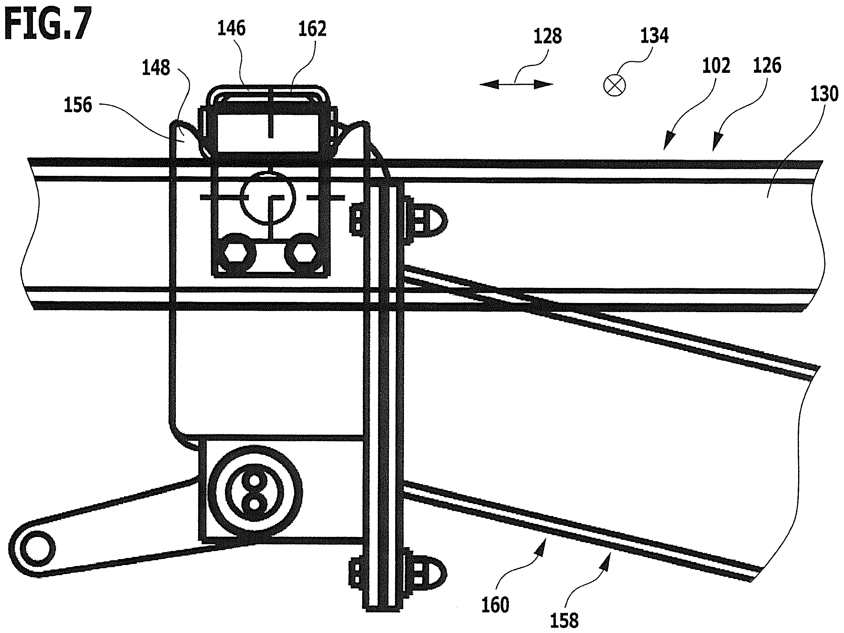

- Fig. 7: eine vergrößerte Darstellung des Bereichs I aus Fig. 6, welche Elemente des Werkstückträgers und der Werkstückträgeraufnahme zeigt, deren Relativposition mittels einer Kontrollvorrichtung ermittelbar ist; und

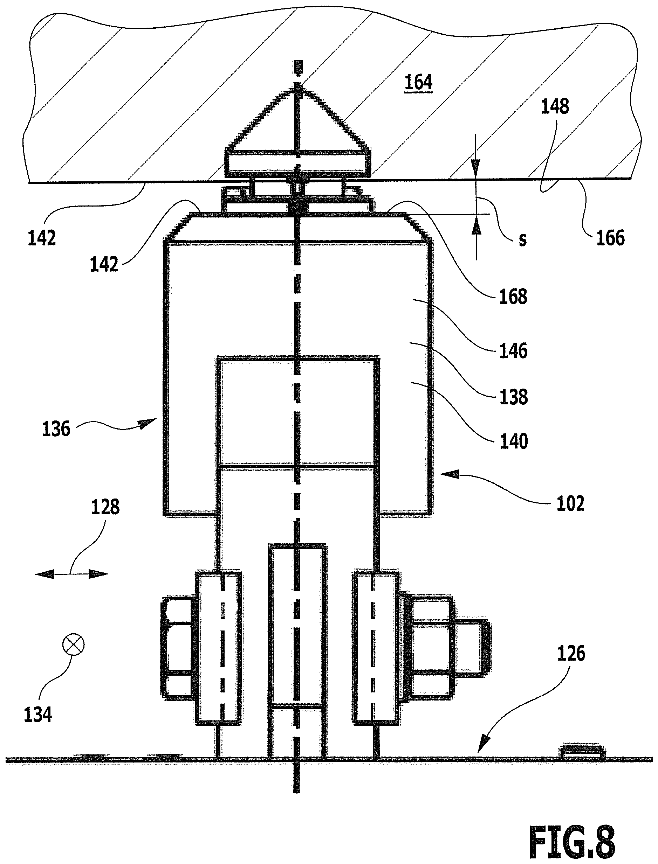

- Fig. 8: eine vergrößerte Darstellung des Bereichs II aus Fig. 6, welche Elemente des Werkstückträgers und eines daran gehaltenen Werkstücks zeigt, deren Relativposition mittels einer Kontrollvorrichtung für die Fördervorrichtung ermittelbar ist.

Gleiche oder funktional äquivalente Elemente sind in allen Figuren mit denselben Bezugszeichen bezeichnet.

Eine in Fig. 1 dargestellte, als Ganzes mit 100 bezeichnete Kontrollvorrichtung für eine Fördervorrichtung zum Fördern von Werkstücken, insbesondere von Fahrzeugkarosserien oder von Karosseriemodulen, durch eine Fertigungsanlage, bei welcher die zu fördernden Werkstücke jeweils auf einem Werkstückträger 102 angeordnet sind, umfasst einen Kontrollbereich 104, der einen zu kontrollierenden Werkstückträger 102 aufnehmen kann, und ein oder mehrere Bilderzeugungsvorrichtungen 106, insbesondere Kameras 108. Mittels der Bilderzeugungsvorrichtungen 106 ist jeweils ein Bild erzeugbar, das einen der jeweiligen Bilderzeugungsvorrichtung 106 zugeordneten Abschnitt des Werkstückträgers darstellt.

Jede Bilderzeugungsvorrichtung 106 ist über eine Datenleitung 110 mit einer Auswertungsvorrichtung 112 der Kontrollvorrichtung 100 verbunden.

Die Bilderzeugungsvorrichtungen 106 können grundsätzlich in beliebiger Weise in einer gewünschten Position relativ zu dem Kontrollbereich 104 der Kontrollvorrichtung 100 positioniert sein.

Insbesondere kann vorgesehen sein, dass eine oder mehr Bilderzeugungsvorrichtungen 106 an einer Haltekonstruktion 114 angeordnet sind.

Die Haltekonstruktion 114 kann beispielsweise mehrere vertikale Pfosten 116 umfassen, die durch Längsträger 118 paarweise miteinander verbunden sind.

Die Längsträger 118 sind vorzugsweise im Wesentlichen horizontal und im Wesentlichen parallel zu einer Förderrichtung 120 ausgerichtet, längs welcher der Werkstückträger 102 mittels der Fördervorrichtung in den Kontrollbereich 104 hinein und nach erfolgter Kontrollmessung wieder aus dem Kontrollbereich 104 heraus förderbar ist.

Die Längsträger 118 der Haltekonstruktion 114 können durch Querträger 122 miteinander verbunden sein, welche vorzugsweise im Wesentlichen horizontal und im Wesentlichen senkrecht zur Förderrichtung 120 ausgerichtet sind.

An den Querträgern 122 können jeweils ein oder mehrere Halterungen 124 angeordnet sein, an denen jeweils eine Bilderzeugungsvorrichtung 106 gehalten ist.

Der Werkstückträger 102 ist im dargestellten Ausführungsbeispiel als ein Skid oder Skidrahmen 126 ausgebildet, welcher zwei parallel zu einer Längsrichtung 128 des Werkstückträgers 102 ausgerichtete Skidkufen 130 umfasst.

Die Skidkufen 130 sind durch Traversen 132 miteinander verbunden, welche vorzugsweise parallel zu einer senkrecht zur Längsrichtung 128 des Werkstückträgers 102 verlaufenden Querrichtung 134 des Werkstückträgers 102 ausgerichtet sind.

Jede der Traversen 132 trägt jeweils zwei Arretiervorrichtungen 136 zum lösbaren Arretieren eines Werkstücks an dem Werkstückträger 102.

Jede der Arretiervorrichtungen 136 umfasst ein Kopplungselement 138 zum Herstellen einer mechanischen Kopplung zwischen dem Werkstückträger 102 und dem Werkstück, beispielsweise in Form eines Skidpins 140.

Beim zeichnerisch dargestellten Ausführungsbeispiel ist jedem Kopplungselement 138 jeweils eine Bilderzeugungsvorrichtung 106 zugeordnet, welche ein Bild des jeweiligen Kopplungselements 138 erzeugt, wenn der Werkstückträger 102 sich in einer Messposition in dem Kontrollbereich 104 der Kontrollvorrichtung 100 befindet.

Vorzugsweise ist die Bilderzeugungsvorrichtung 106 im Wesentlichen vertikal über dem jeweils zugeordneten Kopplungselement 138 des Werkstückträgers 102 angeordnet, wenn der Werkstückträger 102 sich in der Messposition befindet. Besonders günstig ist es, wenn die optische Achse der Bilderzeugungsvorrichtung 106 durch das jeweils zu erfassende Kopplungselement 138 verläuft.

Die Relativpositionen der Bilderzeugungsvorrichtungen 106 untereinander entsprechen daher vorzugsweise im Wesentlichen den Relativpositionen der Kopplungselemente 138 des Werkstückträgers 102 untereinander.

Die Auswertungsvorrichtung 112 umfasst einen programmierbaren Prozessor und einen Speicher sowie Software, die dazu geeignet ist, in den von den Bilderzeugungsvorrichtungen 106 erzeugten und an die Auswertungsvorrichtung 112 übermittelten Bilddaten vorgegebene Konturen der zu erfassenden Kopplungselemente 138 zu detektieren und die Ist-Positionen dieser Konturen mit abgespeicherten Soll-Positionen dieser Konturen zu vergleichen.

Die Soll-Positionen der Konturen können beispielsweise dadurch festgelegt werden, dass ein Master-Werkstückträger in die Messposition im Kontrollbereich 104 der Kontrollvorrichtung 100 eingebracht wird, mittels der Bilderzeugungsvorrichtungen 106 Bilder der Kopplungselemente 138 des Master-Werkstückträgers erzeugt werden, bestimmte Konturen der Kopplungselemente 138 des Master-Werkstückträgers ausgewählt und die Positionen dieser Referenzkonturen der Kopplungselemente 138 des Master-Werkstückträgers als die Soll-Positionen dieser Konturen festgelegt und abgespeichert werden.

Alternativ hierzu können die von der Auswertungsvorrichtung 112 zu ermittelnden Konturen der Kopplungselemente 138 sowie deren Soll-Positionen auch ohne Verwendung eines Master-Werkstückträgers definiert und in der Auswertungsvorrichtung 112 abgespeichert werden.

Die vorstehend beschriebene Kontrollvorrichtung 100 funktioniert wie folgt:
Im laufenden Betrieb der Fördervorrichtung, mittels welcher beispielsweise Werkstücke durch eine Lackieranlage gefördert werden, wird ein zu prüfender Werkstückträger 102 von der Fördervorrichtung, beispielsweise mittels einer Rollenbahn, in den Kontrollbereich 104 der Kontrollvorrichtung 100 gefördert und dort in einer Messposition angehalten.

Dabei kann insbesondere vorgesehen sein, dass der Kontrollbereich 104 in die normale Förderbahn des Werkstückträgers 102 integriert ist, so dass der Werkstückträger 102 vorzugsweise bei jedem Umlauf durch die Fördervorrichtung kontrolliert wird.

Die Messposition des Werkstückträgers 102 muss nicht exakt festgelegt sein, da bei der Kontrolle des Werkstückträgers 102 lediglich Relativpositionen der Kopplungselemente 138 des Werkstückträgers 102 untereinander bestimmt werden, nicht aber die Positionen der Kopplungselemente 138 in Bezug auf ein stationäres Bezugssystem der Kontrollvorrichtung 100 oder in Bezug auf einen exakt positionierten Master-Werkstückträger.

Es genügt daher, wenn die Positionierung des Werkstückträgers 102 im Kontrollbereich 104 beispielsweise mittels eines Endschalters erfolgt.

Eine Fixierung oder eine Zentrierung des Werkstückträgers 102 in der Messposition ist nicht notwendig.

Der zu prüfende Werkstückträger 102 wird während einer kurzen Messzeit von beispielsweise höchstens ungefähr 10 Sekunden, insbesondere von höchstens ungefähr 2 Sekunden, in der Messposition angehalten und dann von der Fördervorrichtung wieder aus dem Kontrollbereich 104 heraus gefördert.

Während dieser Messzeit wird mittels jeder Bilderzeugungsvorrichtung 106 jeweils ein Bild des jeweils zugeordneten Kopplungselements 138 des Werkstückträgers 102 erzeugt.

Wenn die für die Bilderzeugung erforderliche Zeit ausreichend kurz ist und die Zeitpunkte der Bilderzeugung durch die verschiedenen Bilderzeugungsvorrichtungen 106 miteinander synchronisiert werden, ist es auch möglich, die Messung bei kontinuierlich durch den Kontrollbereich 104 durchlaufendem Werkstückträger 102 durchzuführen, ohne dass der Werkstückträger 102 in der Messposition angehalten wird.

Wenn die Messung bei durchlaufendem Werkstückträger 102 erfolgt, kann die Durchlaufgeschwindigkeit eine normale Fördergeschwindigkeit oder eine von der normalen Fördergeschwindigkeit verschiedene, vorzugsweise niedrigere, Mess-Fördergeschwindigkeit sein.

Um die Konturen der zu erfassenden Kopplungselemente 138 besonders deutlich erkennbar zu machen, kann die Wellenlänge des Lichts, mit welchem die Kopplungselemente 138 beleuchtet werden, und/oder die Wellenlänge, bei welcher die Bilderzeugungsvorrichtung 106 das Bild des Kopplungselements 138 aufnimmt, so ausgewählt werden, dass die zu erfassende Kontur mit möglichst großem Kontrast dargestellt wird.

Hierfür können beispielsweise die Grauwerte des aufgenommenen Bildes angepasst werden und/oder Filter verwendet werden, um insbesondere die Farbe und die Oberflächenstruktur der zu erfassenden Kopplungselemente 138 zu berücksichtigen.

Ferner ist es möglich, mittels jeder Bilderzeugungsvorrichtung 106 mehrere Bilder des jeweils zugeordneten Kopplungselements 138 bei unterschiedlichen Einstellungen und/oder bei unterschiedlichen Wellenlängen des zur Bilderzeugung verwendeten Lichts zu erzeugen, um die Kontur besonders klar zu erhalten und möglichst genaue Messwerte zu generieren.

Beispielsweise kann vorgesehen sein, dass als Bilderzeugungsvorrichtungen 106 Infrarot-Kameras eingesetzt werden, insbesondere dann, wenn die zu erfassenden Kopplungselemente 138 am Werkstückträger 102 im Betrieb der Fördervorrichtung kälter oder wärmer sind als angrenzende Bereiche des Werkstückträgers 102.

Ferner ist es möglich, die zu erfassenden Kopplungselemente 138 des Werkstückträgers 102 vor der Messung in der Kontrollvorrichtung 100 selektiv abzukühlen oder zu erwärmen, um einen Infrarot-Kontrast gegenüber angrenzenden Bereichen des Werkstückträgers 102 zu erzielen.

Die mittels der Bilderzeugungsvorrichtungen 106 erzeugten Bilder werden über die Datenleitungen 110 an die Auswertungsvorrichtung 112 übermittelt und dort ausgewertet.

Hierzu ermittelt die Auswertungsvorrichtung 112 in jedem Bild eines Kopplungselements 138 eine Kontur 142, beispielsweise den Rand einer Kreisfläche, und den Mittelpunkt 144 dieser Kontur.

Die jeweils ermittelte Kontur 142 und deren Mittelpunkt 144 ist in Fig. 4 a) bis d) für die beispielsweise vier erfassten Kopplungselemente 138 schematisch in durchgezogenen Linien dargestellt (dabei zeigt Fig. 4 a) beispielhaft die Kontur 142 des Kopplungselements 138a am Werkstückträger 102 vorne rechts, Fig. 4 b) die Kontur 142 des Kopplungselements 138b hinten rechts, Fig. 4 c) die Kontur 142 des Kopplungselements 138c vorne links und Fig. 4 d) die Kontur des Kopplungselements 138d hinten links).

Der ermittelte Mittelpunkt 144 der Kontur 142 stellt die jeweilige Ist-Position des Kopplungselements 138 dar und wird von der Auswertungsvorrichtung 112 mit dem Mittelpunkt 144' der Kontur 142' des jeweils entsprechenden Kopplungselements 138 des zuvor aufgenommenen Master-Werkstückträgers (in den Fig. 4 a) bis d) in gebrochenen Linien dargestellt) verglichen, welcher die Soll-Position des jeweiligen Kopplungselements 138 repräsentiert.

Durch diesen Vergleich wird für jedes Kopplungselement 138 eine vektorielle Gesamtabweichung Δ_{g} zwischen der Ist-Position und der Soll-Position ermittelt.

Wie in Fig. 5 dargestellt, setzt sich diese Gesamtabweichung Δ_{g} aus einer für alle Kopplungselemente 138 gleichen mittleren vektoriellen Abweichung Δₘ und einer für die verschiedenen Kopplungselemente 138 jeweils unterschiedlichen individuellen vektoriellen Abweichung Δᵢ zusammen.

Die mittlere Abweichung Δₘ entspricht einer Verschiebung zwischen der Messposition des gemessenen Werkstückträgers 102 und der Messposition des Master-Werkstückträgers bei der Einrichtung der Kontrollvorrichtung 100 und enthält somit keine Information über die Relativpositionen zwischen den Kopplungselementen 138 am zu prüfenden Werkstückträger 102.

Aus den individuellen Abweichungen Δᵢ werden von der Auswertungsvorrichtung 112 mittels eines Berechnungsprogramms die Abweichungen der Relativpositionen der Kopplungselemente 138 des gemessenen Werkstückträgers 102 von den Relativpositionen der Kopplungselemente 138 am Master-Werkstückträger berechnet.

Hierdurch können die Abstände der Kopplungselemente 138 am gemessenen Werkstückträger 102 voneinander in der Längsrichtung 128, in der Querrichtung 134 und in den Diagonalrichtungen des Werkstückträgers 102 berechnet werden, und diese Abstände können mit jeweils vorgegebenen Toleranzbereichen verglichen werden, um zu bewerten, ob der gemessene Werkstückträger 102 in der Fördervorrichtung weiterverwendet werden kann oder aber ausgetauscht und wieder instandgesetzt werden muss.

Bei der vorstehend beschriebenen Kontrollvorrichtung 100 stellt somit eines der Kopplungselemente 138 des Werkstückträgers 102, beispielsweise das vordere rechte Kopplungselement 138a, ein erstes Element 146 des Werkstückträgers 102 und ein weiteres Kopplungselement 138, beispielsweise das hintere rechte Kopplungselement 138b, ein zweites Element 148 des Werkstückträgers 102 dar, wobei mittels der Auswertungsvorrichtung 112 aus den von den Bilderzeugungsvorrichtungen 106 erzeugten Bildern von Abschnitten des Werkstückträgers 102 eine Information über die Relativposition zwischen dem ersten Element 146 und dem zweiten Element 148 ermittelt wird.

Alternativ oder ergänzend hierzu ist es auch möglich, mittels der vorstehend beschriebenen Kontrollvorrichtung 100 eine Relativposition zwischen einem Kopplungselement 138 und einem Referenzelement ohne Kopplungsfunktion zu ermitteln, indem ein solches Referenzelement, beispielsweise ein Referenzpunkt oder eine andere Referenzmarkierung, an dem Werkstückträger 102 angeordnet wird und das Referenzelement ebenfalls mittels einer Bilderzeugungsvorrichtung 106 aufgenommen wird, um dann analog zu der vorstehend beschriebenen Vorgehensweise den Abstand eines Kopplungselements 138 von dem Referenzelement zu ermitteln und mit einem Toleranzbereich zu vergleichen.

Um auch unter widrigen Licht- und Verschmutzungsverhältnissen noch eine sichere Detektion des jeweils zu erfassenden Kopplungselements 138 oder Referenzelements durch die Auswertungsvorrichtung 112 zu ermöglichen, ist es von Vorteil, an dem betreffenden Kopplungselement 138 oder Referenzelement eine oder mehrere geometrische Markierungen, beispielsweise in Form einer Bohrung, eines zentrierten Ringes, eines zentrierten Kreuzes oder in Form einer anderen, vorzugsweise rotationssymmetrischen, Markierung, anzuordnen.

Ferner ist es von Vorteil, wenn die Auswertungsvorrichtung 112 und insbesondere deren Software so ausgebildet ist, dass für die Ermittlung der Referenzkontur und damit der Ist-Position des Kopplungselements 138 oder des Referenzelements nicht die vollständige geometrische Form des betreffenden Elements erkennbar sein muss, sondern die Auswertungsvorrichtung 112 bereits aus einer Teilkontur des betreffenden Elements dessen Ist-Position ermitteln kann. Hierdurch wird erreicht, dass mittels der Kontrollvorrichtung 100 auch dann eine korrekte Messung des Werkstückträgers 102 erfolgt, wenn beispielsweise eines der Kopplungselemente 138 oder ein Referenzelement zumindest teilweise mit einem Lack oder mit Verunreinigungen bedeckt ist.

Bei einer Variante der in Fig. 1 dargestellten Ausführungsform der Kontrollvorrichtung 100 kann vorgesehen sein, dass die Kontrollvorrichtung 100 nur eine einzige Bilderzeugungsvorrichtung 106, insbesondere in Form einer einzigen Kamera 108, umfasst, welche ein Bild aller zu erfassenden Kopplungselemente 138 (und gegebenenfalls aller zu erfassenden Referenzelemente) erzeugt.

In diesem Fall ermittelt die Auswertungsvorrichtung 112 die Konturen 142 mehrerer zu erfassender Elemente aus demselben Bild.

Um eine ausreichende Genauigkeit zu erhalten, ist es in diesem Fall günstig, wenn eine Bilderzeugungsvorrichtung 106 mit hoher Auflösung verwendet wird.

Grundsätzlich ist es auch möglich, die Vermessung eines Werkstückträgers 102 über eine möglichst genaue Positionierung und Fixierung des Werkstückträgers 102 in der Messposition und die nachfolgende Erzeugung eines Bildes zumindest eines Abschnitts des Werkstückträgers 102 vorzunehmen.

In diesem Fall enthält die Messung als Ungenauigkeit die Fertigungstoleranz zwischen der Einrichtung zur Fixierung des Werkstückträgers 102 in der Messposition einerseits und den zu erfassenden Elementen, insbesondere den zu erfassenden Kopplungselementen 138, andererseits.

Eine in Fig. 2 dargestellte zweite Ausführungsform einer Kontrollvorrichtung 100 unterscheidet sich von der in Fig. 1 dargestellten ersten Ausführungsform dadurch, dass die von den Bilderzeugungsvorrichtungen 106 zu erfassenden Elemente, insbesondere die Kopplungselemente 138, nicht nur mit dem ohnehin vorhandenen Umgebungslicht beleuchtet werden, sondern hierfür eine separate Beleuchtung eingesetzt wird.

Diese Ausführungsform der Kontrollvorrichtung 100 umfasst daher eine oder mehr Beleuchtungseinrichtungen 150 zur Beleuchtung jeweils eines von einer Bilderzeugungsvorrichtung 106 zu erfassenden Elements des Werkstückträgers 102, insbesondere jeweils eines Kopplungselementes 138.

Die Beleuchtungseinrichtungen 150 sind vorzugsweise so ausgebildet und angeordnet, dass die Beleuchtung des jeweils zu beleuchtenden Elements im Gegenlichtverfahren erfolgt. Hierbei liegen die Bilderzeugungsvorrichtung 106, insbesondere die Kamera 108, das zu erfassende Element, insbesondere das Kopplungselement 138 oder ein Referenzelement, und die Beleuchtungseinrichtung 150, insbesondere eine Lichtquelle, in dieser Reihenfolge auf einer geraden Achse 152, welche vorzugsweise im Wesentlichen mit der optischen Achse der Bilderzeugungsvorrichtung 106 übereinstimmt, wobei die Beleuchtungseinrichtung 150 so ausgerichtet ist, dass sie Licht zu dem zu erfassenden Element und zu der Bilderzeugungsvorrichtung 106 hin emittiert.

Durch die separate Beleuchtung der zu erfassenden Elemente mittels der Beleuchtungseinrichtungen 150 wird der Kontrast der Konturen der zu erfassenden Elemente gegenüber der Umgebung erhöht.

Vorzugsweise ist dabei die separate Beleuchtung an die jeweiligen Farben und Konturen der zu erfassenden Elemente angepasst.

Beispielsweise kann als Beleuchtungseinrichtung 150 eine Lichtquelle für ultraviolettes Licht (UV-Licht) oder eine Lichtquelle für infrarotes Licht (IR-Licht) verwendet werden, jeweils in Kombination mit einer auf das betreffende Licht ansprechenden Bilderzeugungsvorrichtung 106.

Im Übrigen stimmt die in Fig. 2 dargestellte zweite Ausführungsform einer Kontrollvorrichtung 100 hinsichtlich Aufbau und Funktionsweise mit der in Fig. 1 dargestellten ersten Ausführungsform überein, auf deren vorstehende Beschreibung insoweit Bezug genommen wird.

Eine in Fig. 3 dargestellte dritte Ausführungsform einer Kontrollvorrichtung 100 unterscheidet sich von der in Fig. 2 dargestellten zweiten Ausführungsform dadurch, dass die von den Bilderzeugungsvorrichtungen 106 zu erfassenden Elemente, insbesondere die Kopplungselemente 138 oder Referenzelemente, nicht oder zumindest nicht ausschließlich direkt von den Beleuchtungseinrichtungen 150 beleuchtet werden, sondern indirekt mittels jeweils eines Reflektors 154.

Der Reflektor 154 kann beispielsweise Umgebungslicht zu dem jeweils zu erfassenden Element hin reflektieren.

Alternativ oder ergänzend hierzu kann vorgesehen sein, dass der Reflektor 154 zusammen mit einer Beleuchtungseinrichtung 150 verwendet wird, wobei der Reflektor 154 von der Beleuchtungseinrichtung 150 emittiertes Licht zu dem zu erfassenden Element hin reflektiert.

Insbesondere kann vorgesehen sein, dass die Beleuchtungseinrichtung 150 den Reflektor 154 gezielt anstrahlt.

Vorzugsweise erfolgt hierbei die Beleuchtung des zu erfassenden Elements im Gegenlichtverfahren, wobei die Bilderzeugungsvorrichtung 106, insbesondere die Kamera 108, das zu erfassende Element, beispielsweise das Kopplungselement 138, und der Reflektor 154 in dieser Reihenfolge auf einer gemeinsamen Achse 152 liegen, wobei der Reflektor 154 so ausgerichtet ist, dass er Licht zu dem zu erfassenden Element und zu der Bilderzeugungsvorrichtung 106 hin reflektiert.

Der Reflektor 154 kann insbesondere eine Reflexionsfolie umfassen.

Eine solche Reflexionsfolie ist vorzugsweise so beschaffen, dass sie möglichst viel Licht reflektiert.

Insbesondere kann der Reflektor 154 eine Oberfläche aufweisen, die weiß oder verspiegelt ist und/oder in einer anderen Form so gestaltet ist, dass zu den zu erwartenden Farben des zu erfassenden Elements, insbesondere des Kopplungselements 138 oder eines Referenzelements, ein möglichst starker Kontrast entsteht.

Im Übrigen stimmt die in Fig. 3 dargestellte dritte Ausführungsform einer Kontrollvorrichtung 100 hinsichtlich Aufbau und Funktionsweise mit den in den Fig. 1 und 2 dargestellten Ausführungsformen der Kontrollvorrichtung 100 überein, auf deren vorstehende Beschreibung insoweit Bezug genommen wird.

Eine Kontrollvorrichtung 100 mit einer Bilderzeugungsvorrichtung 106 und einer Auswertungsvorrichtung 102 der vorstehend beschriebenen Art kann beispielsweise auch dazu verwendet werden, zu überprüfen, ob ein Werkstückträger 102, beispielsweise ein Skidrahmen 126, ordnungsgemäß an einer Werkstückträgeraufnahme 156 einer Fördervorrichtung 158 verriegelt ist, wie dies schematisch in den Fig. 6 und 7 dargestellt ist.

Bei diesem Ausführungsbeispiel umfasst die Fördervorrichtung 158 eine Drehhalterung 160, welche längs einer Förderbahn translatorisch bewegbar und dabei um eine, insbesondere horizontale, Drehachse drehbar ist.

Die Drehhalterung 160 umfasst mehrere Werkstückträgeraufnahmen 156, in welchen jeweils ein Haltebolzen 162 des Werkstückträgers 102 aufgenommen und mittels eines Verriegelungshakens gesichert ist.

In diesem Fall wird mittels einer Bilderzeugungsvorrichtung 106 ein Bild des in Fig. 7 dargestellten Bereichs des Werkstückträgers 102 und der Fördervorrichtung 158 aufgenommen, und mittels der Auswertungsvorrichtung 112 werden zwei oder mehr Konturen des Werkstückträgers 102 und der Fördervorrichtung 158, insbesondere der Werkstückträgeraufnahme 156 und/oder des Verriegelungshakens, detektiert. Ferner werden die Relativpositionen dieser Konturen ermittelt und es wird überprüft, ob die Abstände dieser Konturen innerhalb eines vorgegebenen Toleranzfeldes liegen.

Hierdurch kann insbesondere die Lage des Verriegelungshakens kontrolliert und geprüft werden, ob der Haltebolzen 162 des Werkstückträgers 102 in der Werkstückträgeraufnahme 156 vorhanden ist.

Somit ist bei diesem Ausführungsbeispiel der Haltebolzen 162 ein erstes Element 146 des Werkstückträgers 102, dessen Relativposition in Bezug auf ein zweites Element 148 der Fördervorrichtung 158, nämlich die Werkstückträgeraufnahme 156, ermittelt wird.

Alternativ oder ergänzend hierzu ist es auch möglich, ein auf den Werkstückträger 102 aufgesetztes Werkstück 164 daraufhin zu kontrollieren, ob das Werkstück 164 ordnungsgemäß an dem Werkstückträger 102 arretiert ist, indem die Lage des Werkstücks 164, insbesondere einer Fahrzeugkarosserie oder eines Karosseriemoduls, relativ zu einer Arretiervorrichtung 136 des Werkstückträgers 102 kontrolliert wird, wie dies in Fig. 8 schematisch dargestellt ist.

Hierbei kann insbesondere mittels einer Bilderzeugungsvorrichtung 106 ein Bild des in Fig. 8 dargestellten Abschnitts des Werkstücks 164 und der Arretiervorrichtung 136 des Werkstückträgers 102 erzeugt werden. Aus diesem Bild ermittelt die Auswertungsvorrichtung 112 der Kontrollvorrichtung 100 Konturen des Werkstücks 164 und der Arretiervorrichtung 136 und die Relativposition dieser Konturen zueinander. Aus dieser Relativposition kann dann beispielsweise die Weite eines Spaltes s zwischen einem Rand 166 des Werkstücks 164 und einer Oberfläche 168 der Arretiervorrichtung 136 ermittelt und daraufhin überprüft werden, ob die Weite des Spaltes in einem vorgegebenen Toleranzbereich liegt.

Somit ist bei diesem Ausführungsbeispiel die Arretiervorrichtung 136 ein erstes Element 146 des Werkstückträgers 102, dessen Relativposition in Bezug auf ein zweites Element 148 des Werkstücks, nämlich den unteren Rand 166 des Werkstücks, ermittelt wird.

## Patentansprüche

1. Kontrollvorrichtung für eine Fördervorrichtung (158), umfassend eine oder mehr Bilderzeugungsvorrichtungen (106) zur Erzeugung mindestens eines Bildes, das zumindest einen Abschnitt der Fördervorrichtung (158), eines zu fördernden Werkstücks (164) und/oder eines Werkstückträgers (102) darstellt, und
eine Auswertungsvorrichtung (112), mittels welcher aus dem mindestens einen Bild eine Information über eine Relativposition zwischen mindestens einem ersten Element (146) der Fördervorrichtung (158), des Werkstücks (164) oder des Werkstückträgers (102) und mindestens einem zweiten Element (148) der Fördervorrichtung (158), des Werkstücks (164) oder des Werkstückträgers (102) ermittelbar ist,
wobei mindestens eines der Elemente (146, 148), deren Relativposition ermittelbar ist, ein Kopplungselement (138) zum Herstellen einer mechanischen Kopplung zwischen der Fördervorrichtung (158) und dem Werkstück (164), zwischen der Fördervorrichtung (158) und dem Werkstückträger (102) oder zwischen dem Werkstückträger (102) und dem Werkstück (164) ist,
**dadurch gekennzeichnet,**
**dass** mittels der Auswertungsvorrichtung (112) eine erste Differenz zwischen einer Ist-Position eines ersten Elements (146) der Fördervorrichtung (158), des Werkstücks (164) oder des Werkstückträgers (102) und einer Soll-Position des ersten Elements (146) ermittelbar ist,
**dass** mittels der Auswertungsvorrichtung (112) eine zweite Differenz zwischen der Ist-Position eines zweiten Elements (148) der Fördervorrichtung (158), des Werkstücks (164) oder des Werkstückträgers (102) und einer Soll-Position des zweiten Elements (148) ermittelbar ist, dass mittels der Auswertungsvorrichtung aus der ersten Differenz und der zweiten Differenz ein Ist-Abstand zwischen dem ersten Element (146) und dem zweiten Element (148) ermittelbar ist und
**dass** mittels der Auswertungsvorrichtung (112) der Ist-Abstand zwischen dem ersten Element (146) und dem zweiten Element (148) mit einem Soll-Abstand vergleichbar ist.

2. Kontrollvorrichtung nach Anspruch 1, **dadurch gekennzeichnet, dass** mindestens eines der Elemente (146, 148), deren Relativposition ermittelbar ist, ein Referenzelement ist, das an der Fördervorrichtung (158), an dem Werkstück (164) oder an dem Werkstückträger (102) angeordnet ist.

3. Kontrollvorrichtung nach einem der Ansprüche 1 oder 2, **dadurch gekennzeichnet, dass** die Kontrollvorrichtung (100) mehrere Bilderzeugungsvorrichtungen (106) zur Erzeugung von Bildern verschiedener Abschnitte der Fördervorrichtung (158), des Werkstücks (164) oder des Werkstückträgers (102) umfasst.

4. Kontrollvorrichtung nach einem der Ansprüche 1 bis 3, **dadurch gekennzeichnet, dass** die Kontrollvorrichtung (100) eine oder mehr Beleuchtungseinrichtungen (150) zur Beleuchtung eines von einer Bilderzeugungsvorrichtung (106) zu erfassenden Elements (138) der Fördervorrichtung (158), des Werkstücks (164) oder des Werkstückträgers (102) umfasst.

5. Kontrollvorrichtung nach einem der Ansprüche 1 bis 4, **dadurch gekennzeichnet, dass** die Kontrollvorrichtung (100) einen oder mehr Reflektoren (154) umfasst, mittels welchen ein von einer Bilderzeugungsvorrichtung (106) zu erfassendes Element (138) der Fördervorrichtung (158), des Werkstücks (164) oder des Werkstückträgers (102) mit reflektiertem Licht beleuchtbar ist.

6. Kontrollvorrichtung nach einem der Ansprüche 4 oder 5, **dadurch gekennzeichnet, dass** die Beleuchtungseinrichtung (150) und/oder der Reflektor (154) so ausgebildet und angeordnet ist, dass die Beleuchtung des zu beleuchtenden Elements (138) im Gegenlichtverfahren erfolgt.

7. Kontrollvorrichtung nach einem der Ansprüche 1 bis 6, **dadurch gekennzeichnet, dass** ein von einer Bilderzeugungsvorrichtung (106) zu erfassendes Element (138) der Fördervorrichtung (158), des Werkstücks (164) oder des Werkstückträgers (102) mit einer Positionsmarkierung versehen ist.

8. Verfahren zum Kontrollieren einer Fördervorrichtung (158), umfassend Folgendes:
- Erzeugung mindestens eines Bildes, das zumindest einen Abschnitt der Fördervorrichtung (158), eines zu fördernden Werkstücks (164) oder eines Werkstückträgers (102) darstellt; und
- Ermitteln einer Information über eine Relativposition zwischen mindestens einem ersten Element (146) der Fördervorrichtung (158), des Werkstücks (164) oder des Werkstückträgers (102) und mindestens einem zweiten Element (148) der Fördervorrichtung (158), des Werkstücks (164) oder des Werkstückträgers (102) aus dem mindestens einen Bild;
wobei mindestens eines der Elemente (146, 148), deren Relativposition ermittelt wird, ein Kopplungselement (138) zum Herstellen einer mechanischen Kopplung zwischen der Fördervorrichtung (158) und dem Werkstück (164), zwischen der Fördervorrichtung (158) und dem Werkstückträger (102) oder zwischen dem Werkstückträger (102) und dem Werkstück (164) ist,
**dadurch gekennzeichnet,**
**dass** mittels der Auswertungsvorrichtung (112) eine erste Differenz zwischen einer Ist-Position eines ersten Elements (146) der Fördervorrichtung (158), des Werkstücks (164) oder des Werkstückträgers (102) und einer Soll-Position des ersten Elements (146) ermittelt wird,
**dass** mittels der Auswertungsvorrichtung (112) eine zweite Differenz zwischen der Ist-Position eines zweiten Elements (148) der Fördervorrichtung (158), des Werkstücks (164) oder des Werkstückträgers (102) und einer Soll-Position des zweiten Elements (148) ermittelt wird,
**dass** mittels der Auswertungsvorrichtung aus der ersten Differenz und der zweiten Differenz ein Ist-Abstand zwischen dem ersten Element (146) und dem zweiten Element (148) ermittelt wird und
**dass** mittels der Auswertungsvorrichtung (112) der Ist-Abstand zwischen dem ersten Element (146) und dem zweiten Element (148) mit einem Soll-Abstand verglichen wird.

9. Verfahren nach Anspruch 8, **dadurch gekennzeichnet, dass** das mindestens eine Bild während des normalen Förderbetriebs der Fördervorrichtung (158) erzeugt wird.

10. Verfahren nach einem der Ansprüche 8 oder 9, **dadurch gekennzeichnet, dass** aufgrund der ermittelten Information eine Zuordnung zwischen einem zu fördernden Werkstück (164) und einem Werkstückträger (102), zwischen einem zu fördernden Werkstück (164) und einer Werkstückaufnahme der Fördervorrichtung (158) und/oder zwischen einem Werkstückträger (102) und einer Werkstückträgeraufnahme (156) der Fördervorrichtung (158) vorgenommen wird.

## Claims

1. Control apparatus for a conveying apparatus (158), comprising one or more image-generating apparatuses (106) for generating at least one image which depicts at least a portion of the conveying apparatus (158), a workpiece (164) to be conveyed, and/or a workpiece support (102), and an evaluation apparatus (112) by means of which information about a relative position between at least one first element (146) of the conveying apparatus (158), the workpiece (164), or the workpiece support (102) and at least one second element (148) of the conveying apparatus (158), the workpiece (164), or the workpiece support (102) is determinable from the at least one image,
wherein at least one of the elements (146, 148), the relative position of which is determinable, is a coupling element (138) for producing a mechanical coupling between the conveying apparatus (158) and the workpiece (164), between the conveying apparatus (158) and the workpiece support (102), or between the workpiece support (102) and the workpiece (164),
**characterized in that**
a first difference between an actual position of a first element (146) of the conveying apparatus (158), the workpiece (164), or the workpiece support (102) and a desired position of the first element (146) is determinable by means of the evaluation apparatus (112),
**in that** a second difference between the actual position of a second element (148) of the conveying apparatus (158), the workpiece (164), or the workpiece support (102) and a desired position of the second element (148) is determinable by means of the evaluation apparatus (112),
**in that** an actual distance between the first element (146) and the second element (148) is determinable from the first difference and the second difference by means of the evaluation apparatus, and
**in that** the actual distance between the first element (146) and the second element (148) is comparable with a desired distance by means of the evaluation apparatus (112).

2. Control apparatus in accordance with Claim 1, **characterized in that** at least one of the elements (146, 148), the relative position of which is determinable, is a reference element which is arranged on the conveying apparatus (158), on the workpiece (164), or on the workpiece support (102).

3. Control apparatus in accordance with either of Claims 1 or 2, **characterized in that** the control apparatus (100) comprises a plurality of image-generating apparatuses (106) for generating images of different portions of the conveying apparatus (158), the workpiece (164), or the workpiece support (102).

4. Control apparatus in accordance with any one of Claims 1 to 3, **characterized in that** the control apparatus (100) comprises one or more illuminating devices (150) for illuminating an element (138) of the conveying apparatus (158), the workpiece (164), or the workpiece support (102), which is to be detected by an image-generating apparatus (106).

5. Control apparatus in accordance with any one of Claims 1 to 4, **characterized in that** the control apparatus (100) comprises one or more reflectors (154) by means of which an element (138) of the conveying apparatus (158), the workpiece (164), or the workpiece support (102), which is to be detected by an image-generating apparatus (106), is illuminable with reflected light.

6. Control apparatus in accordance with either of Claims 4 or 5, **characterized in that** the illuminating device (150) and/or the reflector (154) is configured and arranged such that the illumination of the element (138) to be illuminated takes place in the backlighting method.

7. Control apparatus in accordance with any one of Claims 1 to 6, **characterized in that** an element (138) of the conveying apparatus (158), the workpiece (164), or the workpiece support (102), which is to be detected by an image-generating apparatus (106), is provided with a position marking.

8. Method for controlling a conveying apparatus (158), comprising the following:
- generating at least one image which depicts at least a portion of the conveying apparatus (158), a workpiece (164) to be conveyed, or a workpiece support (102); and
- determining information about a relative position between at least one first element (146) of the conveying apparatus (158), the workpiece (164), or the workpiece support (102) and at least one second element (148) of the conveying apparatus (158), the workpiece (164), or the workpiece support (102) from the at least one image;
wherein at least one of the elements (146, 148), the relative position of which is determined, is a coupling element (138) for producing a mechanical coupling between the conveying apparatus (158) and the workpiece (164), between the conveying apparatus (158) and the workpiece support (102), or between the workpiece support (102) and the workpiece (164),
**characterized in that**
a first difference between an actual position of a first element (146) of the conveying apparatus (158), the workpiece (164), or the workpiece support (102) and a desired position of the first element (146) is determined by means of the evaluation apparatus (112),
**in that** a second difference between the actual position of a second element (148) of the conveying apparatus (158), the workpiece (164), or the workpiece support (102) and a desired position of the second element (148) is determined by means of the evaluation apparatus (112),
**in that** an actual distance between the first element (146) and the second element (148) is determined from the first difference and the second difference by means of the evaluation apparatus, and
**in that** the actual distance between the first element (146) and the second element (148) is compared with a desired distance by means of the evaluation apparatus (112).

9. Method in accordance with Claim 8, **characterized in that** the at least one image is generated during the normal conveying operation of the conveying apparatus (158).

10. Method in accordance with either of Claims 8 or 9, **characterized in that** an association between a workpiece (164) to be conveyed and a workpiece support (102), between a workpiece (164) to be conveyed and a workpiece receptacle of the conveying apparatus (158), and/or between a workpiece support (102) and a workpiece support receptacle (156) of the conveying apparatus (158) is made on the basis of the determined information.

## Revendications

1. Dispositif de contrôle pour un dispositif de convoyage (158), comprenant un ou plusieurs dispositifs de génération d'image (106) pour la génération d'au moins une image, qui représente au moins une section du dispositif de convoyage (158), d'une pièce (164) à convoyer et/ou d'un porte-pièce (102), et
un dispositif d'évaluation (112), au moyen duquel une information sur une position relative entre au moins un premier élément (146) du dispositif de convoyage (158), de la pièce (164) ou du porte-pièce (102) et au moins un deuxième élément (148) du dispositif de convoyage (158), de la pièce (164) ou du porte-pièce (102) peut être déterminée à partir de l'au moins une image,
dans lequel au moins un des éléments (146, 148), dont la position relative peut être déterminée, est un élément de couplage (138) pour la réalisation d'un couplage mécanique entre le dispositif de convoyage (158) et la pièce (164), entre le dispositif de convoyage (158) et le porte-pièce (102) ou entre le porte-pièce (102) et la pièce (164),
**caractérisé en ce**
**qu'**une première différence entre une position réelle d'un premier élément (146) du dispositif de convoyage (158), de la pièce (164) ou du porte-pièce (102) et une position de consigne du premier élément (146) peut être déterminée au moyen du dispositif d'évaluation (112),
**qu'**une deuxième différence entre la position réelle d'un deuxième élément (148) du dispositif de convoyage (158), de la pièce (164) ou du porte-pièce (102) et une position de consigne du deuxième élément (148) peut être déterminée au moyen du dispositif d'évaluation (112),
**qu'**une distance réelle entre le premier élément (146) et le deuxième élément (148) peut être déterminée au moyen du dispositif d'évaluation à partir de la première différence et de la deuxième différence et
**que** la distance réelle entre le premier élément (146) et le deuxième élément (148) peut être comparée avec une distance de consigne au moyen du dispositif d'évaluation (112).

2. Dispositif de contrôle selon la revendication 1, **caractérisé en ce qu'**au moins un des éléments (146, 148), dont la position relative peut être déterminée, est un élément de référence, qui est disposé au niveau du dispositif de convoyage (158), au niveau de la pièce (164) ou au niveau du porte-pièce (102).

3. Dispositif de contrôle selon l'une quelconque des revendications 1 ou 2, **caractérisé en ce que** le dispositif de contrôle (100) comprend plusieurs dispositifs de génération d'image (106) pour la génération d'images de différentes sections du dispositif de convoyage (158), de la pièce (164) ou du porte-pièce (102).

4. Dispositif de contrôle selon l'une quelconque des revendications 1 à 3, **caractérisé en ce que** le dispositif de contrôle (100) comprend un ou plusieurs dispositifs d'éclairage (150) pour l'éclairage d'un élément (138) à détecter par un dispositif de génération d'image (106) du dispositif de convoyage (158), de la pièce (164) ou du porte-pièce (102).

5. Dispositif de contrôle selon l'une quelconque des revendications 1 à 4, **caractérisé en ce que** le dispositif de contrôle (100) comprend un ou plusieurs réflecteurs (154), au moyen desquels un élément (138) à détecter par un dispositif de génération d'image (106) du dispositif de convoyage (158), de la pièce (164) ou du porte-pièce (102) peut être éclairé avec de la lumière réfléchie.

6. Dispositif de contrôle selon l'une quelconque des revendications 4 ou 5, **caractérisé en ce que** le dispositif d'éclairage (150) et/ou le réflecteur (154) est réalisé et disposé de sorte que l'éclairage de l'élément (138) à éclairer ait lieu en contre-jour.

7. Dispositif de contrôle selon l'une quelconque des revendications 1 à 6, **caractérisé en ce qu'**un élément (138) à détecter par un dispositif de génération d'image (106) du dispositif de convoyage (158), de la pièce (164) ou du porte-pièce (102) est doté d'un marquage de position.

8. Procédé de contrôle d'un dispositif de convoyage (158), comprenant ce qui suit :
- la génération d'au moins une image, qui représente au moins une section du dispositif de convoyage (158), d'une pièce (164) à convoyer ou d'un porte-pièce (102) ; et
- la détermination d'une information sur une position relative entre au moins un premier élément (146) du dispositif de convoyage (158), de la pièce (164) ou du porte-pièce (102) et au moins un deuxième élément (148) du dispositif de convoyage (158), de la pièce (164) ou du porte-pièce (102) à partir de l'au moins une image ;
dans lequel au moins un des éléments (146, 148), dont la position relative est déterminée, est un élément de couplage (138) pour la réalisation d'un couplage mécanique entre le dispositif de convoyage (158) et la pièce (164), entre le dispositif de convoyage (158) et le porte-pièce (102) ou entre le porte-pièce (102) et la pièce (164),
**caractérisé en ce**
**qu'**une première différence entre une position réelle d'un premier élément (146) du dispositif de convoyage (158), de la pièce (164) ou du porte-pièce (102) et une position de consigne du premier élément (146) est déterminée au moyen du dispositif d'évaluation (112),
**qu'**une deuxième différence entre la position réelle d'un deuxième élément (148) du dispositif de convoyage (158), de la pièce (164) ou du porte-pièce (102) et une position de consigne du deuxième élément (148) est déterminée au moyen du dispositif d'évaluation (112),
**qu'**une distance réelle entre le premier élément (146) et le deuxième élément (148) est déterminée au moyen du dispositif d'évaluation à partir de la première différence et de la deuxième différence et
**que** la distance réelle entre le premier élément (146) et le deuxième élément (148) est comparée avec une distance de consigne au moyen du dispositif d'évaluation (112).

9. Procédé selon la revendication 8, **caractérisé en ce que** l'au moins une image est générée pendant le mode de convoyage normal du dispositif de convoyage (158).

10. Procédé selon l'une quelconque des revendications 8 ou 9, **caractérisé en ce qu'**une association entre une pièce (164) à convoyer et un porte-pièce (102), entre une pièce (164) à convoyer et un logement de pièce du dispositif de convoyage (158) et/ou entre un porte-pièce (102) et un logement de porte-pièce (156) du dispositif de convoyage (158) a lieu sur la base de l'information déterminée.
